# EUROPEAN PATENT APPLICATION

(11) **EP 4 432 404 A1**
(43) Date of publication of application: **18.09.2024**
(21) Application number: 22916036.1
(22) Date of filing: 26.12.2022
(51) Int. Cl.: H01M 8/0271, C25B 9/65, C25B 9/77, C25B 13/02, H01M 8/04, H01M 8/12, H01M 8/243, H01M 8/2465, H01M 8/2475, H01M 8/2484

(54) **ELECTROCHEMICAL CELL DEVICE, MODULE, AND MODULE ACCOMMODATION DEVICE**

(30) Priority: 28.12.2021 JP 2021215302
(71) Applicant: Kyocera Corporation, Kyoto-shi, Kyoto 612-8501 (JP)
(72) Inventor: FURUUCHI, Fumito, Kyoto-shi, Kyoto 612-8501 (JP)
(74) Representative: Viering, Jentschura & Partner mbB Patent- und Rechtsanwälte
(86) International application number: PCT/JP2022/047960
(87) International publication number: WO 2023/127813

(57) **Abstract**

The electrochemical cell device includes a cell, a support body, and a fixing member. The cell has a first end and extends from the first end in a first direction. The support body supports one end portion of the cell including the first end. The fixing member is located between the cell and the support body and is in contact with a first surface of the cell along the first direction and a second direction intersecting the first direction. The first surface includes a contact area in contact with the fixing member and a non-contact area not in contact with the fixing member. The contact area has a second end on the first end side. A length in the first direction from the second end to the non-contact area on a side opposite to the first end is larger at a second part located at an end portion in the second direction than at a first part located at a center portion in the second direction.

## Description

### TECHNICAL FIELD

The present disclosure relates to an electrochemical cell device, a module, and a module housing device.

### BACKGROUND OF INVENTION

In recent years, various fuel cell stack devices each including a plurality of fuel cells have been proposed, as next-generation energy. A fuel cell is a type of electrochemical cell capable of obtaining electrical power by using a fuel gas such as a hydrogen-containing gas and an oxygen-containing gas such as air.

### CITATION LIST

### PATENT LITERATURE

Patent Document 1: JP 2015-35417 A

### SUMMARY

An electrochemical cell device according to an aspect of the embodiment includes a cell, a support body, and a fixing member. The cell has a first end and extends from the first end in a first direction. The support body supports one end portion of the cell including the first end. The fixing member is located between the cell and the support body and is in contact with a first surface of the cell along the first direction and a second direction intersecting the first direction. The first surface includes a contact area in contact with the fixing member and a non-contact area not in contact with the fixing member. The contact area has a second end on a side of the first end. A length in the first direction from the second end to the non-contact area on a side opposite to the first end is larger at a second part located at an end portion in the second direction than at a first part located at a center portion in the second direction.

An electrochemical cell device of the present disclosure includes a first cell, a first support body, a second cell, a second support body, and a fixing member. The first cell has a first end and extends from the first end in a first direction. The first support body supports one end portion of the first cell including the first end. The second cell is adjacent to the first cell with the first support body interposed between the first cell and the second cell. The second support body supports one end portion of the second cell adjacent to the one end portion of the first cell. The fixing member is in contact with a first surface of the first cell along the first direction and a second direction intersecting the first direction, and a second surface of the second cell along the first direction and the second direction. The first surface includes a contact area in contact with the fixing member and a non-contact area not in contact with the fixing member. The contact area has a second end on a side of the first end. A length in the first direction from the second end to the non-contact area on a side opposite to the first end is larger at a second part located at an end portion in the second direction than at a first part located at a center portion in the second direction. A length, at the second part, in the first direction from the second end to the non-contact region on a side opposite to the first end is larger at a first end portion distant from the second cell than at a second end portion close to the second cell.

A module of the present disclosure includes the electrochemical cell device described above and a storage container housing the electrochemical cell device.

A module housing device of the present disclosure includes the module described above, an auxiliary device configured to operate the module, and an external case housing the module and the auxiliary device.

### BRIEF DESCRIPTION OF THE DRAWINGS

FIG. 1A is a horizontal cross-sectional view illustrating an example of an electrochemical cell according to a first embodiment.
FIG. 1B is a side view of an example of the electrochemical cell according to the first embodiment when viewed from the side of an air electrode.
FIG. 1C is a side view of an example of the electrochemical cell according to the first embodiment when viewed from the side of an interconnector.
FIG. 2A is a perspective view illustrating an example of an electrochemical cell device according to the first embodiment.
FIG. 2B is a cross-sectional view taken along line X-X illustrated in FIG. 2A.
FIG. 2C is a top view illustrating an example of the electrochemical cell device according to the first embodiment.
FIG. 3 is a cross-sectional view taken along line Y-Y illustrated in FIG. 2C.
FIG. 4 is an enlarged cross-sectional view of a joined portion between a support body and an electrochemical cell in an electrochemical cell device according to a second embodiment.
FIG. 5 is an enlarged cross-sectional view of a joined portion between a support body and an electrochemical cell in an electrochemical cell device according to a third embodiment.
FIG. 6 is a cross-sectional view illustrating an electrochemical cell device according to a fourth embodiment.
FIG. 7 is a cross-sectional view illustrating an electrochemical cell device according to a fifth embodiment.
FIG. 8 is an exterior perspective view illustrating an example of a module according to an embodiment.
FIG. 9 is an exploded perspective view schematically illustrating an example of a module housing device according to an embodiment.

### DESCRIPTION OF EMBODIMENTS

A fuel cell stack device includes, for example, a support body that supports a plurality of fuel cells. Such a structure has room for improvement in the durability of the joined portion between the support body and the fuel cell.

It is expected to provide an electrochemical cell device, a module, and a module housing device having high durability.

Embodiments of an electrochemical cell device, a module, and a module housing device disclosed in the present application will be described below in detail with reference to the accompanying drawings. Note that the disclosure is not limited by the following embodiments.

Note that the drawings are schematic and that the dimensional relationships between elements, the proportions of the elements, and the like may differ from the actual ones. There may be differences between the drawings in the dimensional relationships, proportions, and the like.

### First Embodiment

### Configuration of Electrochemical Cell

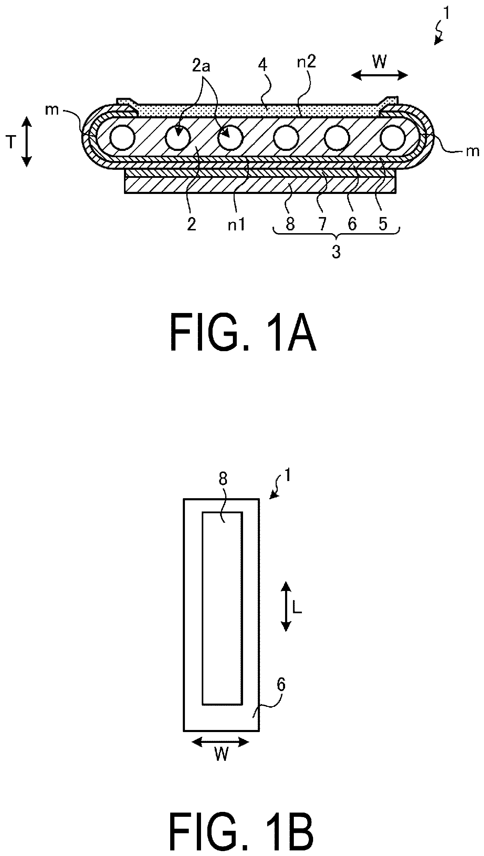

First, with reference to FIGs. 1A to 1C, an example of a solid oxide fuel cell will be described as an electrochemical cell according to the embodiment. The electrochemical cell device may include a cell stack including a plurality of the electrochemical cells. The electrochemical cell device including the plurality of electrochemical cells is simply referred to as a cell stack device.

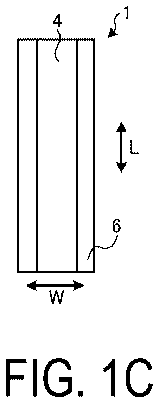

FIG. 1A is a horizontal cross-sectional view illustrating an example of an electrochemical cell according to the first embodiment, FIG. 1B is a side view of an example of the electrochemical cell according to the first embodiment when viewed from an air electrode side, and FIG. 1C is a side view of an example of the electrochemical cell according to the first embodiment when viewed from an interconnector side. Note that FIGs. 1A to 1C each illustrate an enlarged view of a part of a respective one of configurations of the electrochemical cell. Hereinafter, the electrochemical cell may be simply referred to as a cell.

In the example illustrated in FIGs. 1A to 1C, the cell 1 is hollow flat plate-shaped, and has an elongated plate shape. As illustrated in FIG. 1B, the shape of the entire cell 1 when viewed from the side is a rectangle having a side length of, for example, 5 cm to 50 cm in a length direction L and a length of, for example, 1 cm to 10 cm in a width direction W orthogonal to the length direction L. The thickness of the entire cell 1 in a thickness direction T is, for example, 1 mm to 5 mm. The length direction L is an example of a first direction. The width direction W is an example of a second direction intersecting the first direction.

As illustrated in FIG. 1A, the cell 1 includes a support substrate 2 with electrical conductivity, an element portion 3, and an interconnector 4. The support substrate 2 has a pillar shape having a pair of a first surface n1 and a second surface n2 that face each other, and a pair of arc-shaped side surfaces m that connect the first surface n1 and the second surface n2.

The element portion 3 is located on the first surface n1 of the support substrate 2. The element portion 3 includes a fuel electrode 5, a solid electrolyte layer 6, and an air electrode 8. In the example illustrated in FIG. 1A, the interconnector 4 is located on the second surface n2 of the cell 1. Note that the cell 1 may include an intermediate layer 7 between the solid electrolyte layer 6 and the air electrode 8.

As illustrated in FIG. 1B, the air electrode 8 does not extend to the lower end of the cell 1. At the lower end portion of the cell 1, only the solid electrolyte layer 6 is exposed on a surface of the first surface n1. As illustrated in FIG. 1C, the interconnector 4 may extend to the lower end of the cell 1. At a lower end portion of the cell 1, the interconnector 4 and the solid electrolyte layer 6 are exposed on the surface. Note that, as illustrated in FIG. 1A, the solid electrolyte layer 6 is exposed at the surface at the pair of side surfaces m in a circular arc shape of the cell 1. The interconnector 4 need not extend to the lower end of the cell 1.

Hereinafter, each of constituent members constituting the cell 1 will be described.

The support substrate 2 includes gas-flow passages 2a, in which gas flows. The example of the support substrate 2 illustrated in FIG. 1A includes six gas-flow passages 2a. The support substrate 2 has gas permeability, and allows the gas flowing in the gas-flow passage 2a to permeate to the fuel electrode 5. The support substrate 2 may have electrical conductivity. The support substrate 2 having electrical conductivity causes electricity generated in the element portion to be collected in the interconnector 4.

The material of the support substrate 2 includes, for example, an iron group metal component and an inorganic oxide. For example, the iron group metal component may be, for example, Ni (nickel) and/or NiO. The inorganic oxide may be, for example, a specific rare earth element oxide. The rare earth element oxide may contain, for example, one or more rare earth elements selected from Sc, Y, La, Nd, Sm, Gd, Dy, and Yb.

As the material of the fuel electrode 5, a commonly known material may be used. As the fuel electrode 5, porous electrically conductive ceramics, for example, ceramics containing: ZrO₂ in which a calcium oxide, a magnesium oxide, or a rare earth element oxide is in solid solution, and Ni and/or NiO may be used. This rare earth element oxide may contain a plurality of rare earth elements selected from, for example, Sc, Y, La, Nd, Sm, Gd, Dy, and Yb. Hereinafter, ZrO₂ in which a calcium oxide, a magnesium oxide, or a rare earth element oxide is contained as a solid solution may be referred to as stabilized zirconia. Stabilized zirconia may include partially stabilized zirconia.

The solid electrolyte layer 6 is an electrolyte and delivers ions between the fuel electrode 5 and the air electrode 8. At the same time, the solid electrolyte layer 6 has gas blocking properties, and makes leakage of the fuel gas and the oxygen-containing gas less likely to occur.

The material of the solid electrolyte layer 6 may be, for example, ZrO₂ in which from 3 mole% to 15 mole% of a rare earth element oxide is in solid solution. The rare earth element oxide may contain, for example, one or more rare earth elements selected from Sc, Y, La, Nd, Sm, Gd, Dy, and Yb. The solid electrolyte layer 6 may contain, for example, ZrO₂ in which Yb, Sc, or Gd is in solid solution, CeO₂ in which La, Nd, or Yb is in solid solution, BaZrO₃ in which Sc or Yb is in solid solution, or BaCeO₃ in which Sc or Yb is in solid solution.

The air electrode 8 has gas permeability. The open porosity of the air electrode 8 may be, for example, in the range of 20% to 50%, particularly in the range of 30% to 50%. The open porosity of the air electrode 8 may also be referred to as the porosity of the air electrode 8.

The material of the air electrode 8 is not particularly limited, as long as the material is one generally used for the air electrode. The material of the air electrode 8 may be, for example, an electrically conductive ceramic such as a so-called ABO₃ type perovskite oxide.

The material of the air electrode 8 may be, for example, a composite oxide in which strontium (Sr) and lanthanum (La) coexist at the A site. Examples of such a composite oxide include LaₓSr₁₋ₓCo_{y}Fe_{1-y}O₃, LaₓSr₁₋ₓMnO₃, LaₓSr₁₋ₓFeO₃, and LaₓSr₁₋ₓCoO₃. Here, x is 0 < x < 1, and y is 0 < y < 1.

When the element portion 3 includes the intermediate layer 7, the intermediate layer 7 functions as a diffusion suppression layer. When strontium (Sr) contained in the air electrode 8 diffuses into the solid electrolyte layer 6, a resistance layer of SrZrOs is formed in the solid electrolyte layer 6. The intermediate layer 7 makes it difficult for Sr to diffuse, thereby making it difficult for SrZrOs to be formed.

A material of the intermediate layer 7 is not particularly limited as long as the material is one generally used for the diffusion suppression layer of an element between the air electrode 8 and the solid electrolyte layer 6. The material of the intermediate layer 7 may contain, for example, CeO₂ (cerium oxide) in which rare earth elements other than Ce (cerium) are in solid solution. As such rare earth elements, for example, Gd (gadolinium), Sm (samarium), or the like may be used.

The interconnector 4 is dense, and makes the leakage of the fuel gas flowing through the gas-flow passages 2a located inside the support substrate 2, and of the oxygen-containing gas flowing outside the support substrate 2 less likely to occur. The interconnector 4 may have a relative density of 93% or more; particularly 95% or more.

As the material of the interconnector 4, a lanthanum chromite-based perovskite oxide (LaCrO₃-based oxide), a lanthanum strontium titanium-based perovskite oxide (LaSrTiO₃-based oxide), or the like may be used. These materials have electrical conductivity, and are unlikely to be reduced and also unlikely to be oxidized even when brought into contact with a fuel gas such as a hydrogen-containing gas and an oxygen-containing gas such as air.

### Configuration of Electrochemical Cell Device

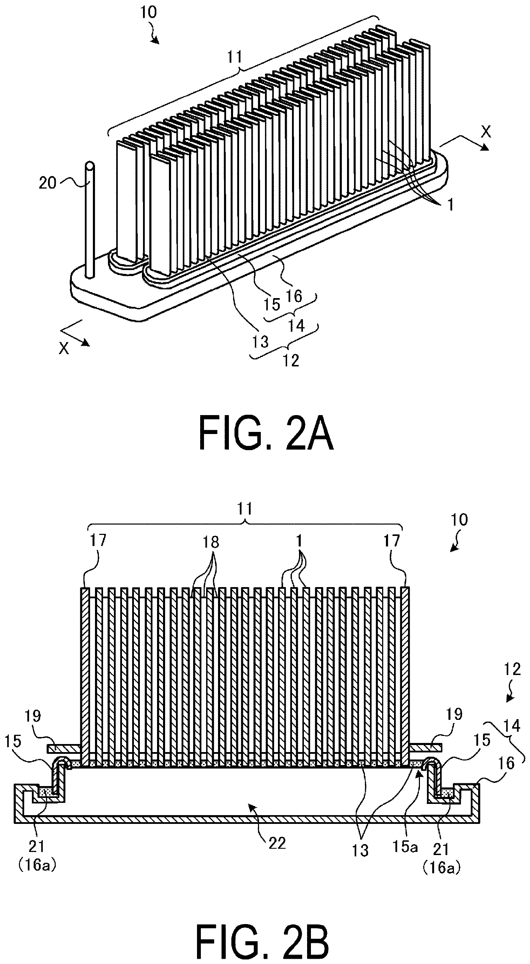

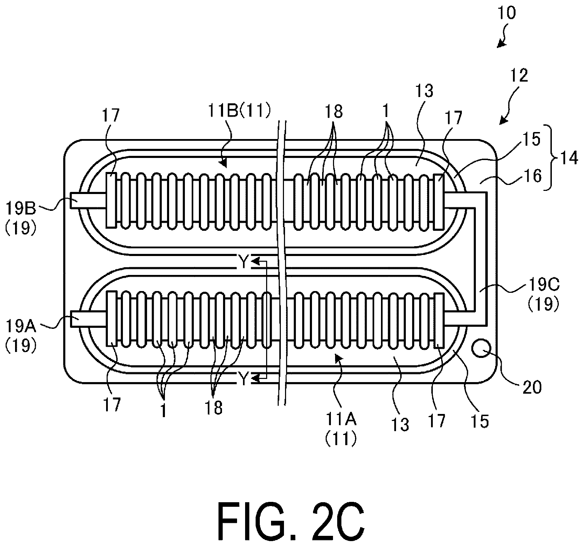

An electrochemical cell device according to the present embodiment using the cell 1 described above will be described with reference to FIGs. 2A to 2C. FIG. 2A is a perspective view illustrating an example of the electrochemical cell device according to the first embodiment, FIG. 2B is a cross-sectional view taken along line X-X illustrated in FIG. 2A, and FIG. 2C is a top view illustrating an example of the electrochemical cell device according to the first embodiment.

As illustrated in FIG. 2A, a cell stack device 10 includes a cell stack 11 including a plurality of the cells 1 arrayed (stacked) in the thickness direction T (see FIG. 1A) of each cell 1, and a fixing member 12.

The fixing member 12 includes a fixing member 13 and a support member 14. The support member 14 supports the cells 1. The fixing member 13 fixes the cells 1 to the support member 14. The support member 14 includes a support body 15 and a gas tank 16. The support body 15 and the gas tank 16, constituting the support member 14, are made of metal and electrically conductive.

As illustrated in FIG. 2B, the support body 15 includes an insertion hole 15a, into which the lower end portions of the plurality of cells 1 are inserted. The lower end portions of the plurality of cells 1 and the inner wall of the insertion hole 15a are bonded by the fixing member 13.

The gas tank 16 includes an opening portion through which a reactive gas is supplied to the plurality of cells 1 via the insertion hole 15a, and a recessed groove 16a located in the periphery of the opening portion. The outer peripheral end portion of the support body 15 is bonded to the gas tank 16 by a bonding member 21, with which the recessed groove 16a of the gas tank 16 is filled.

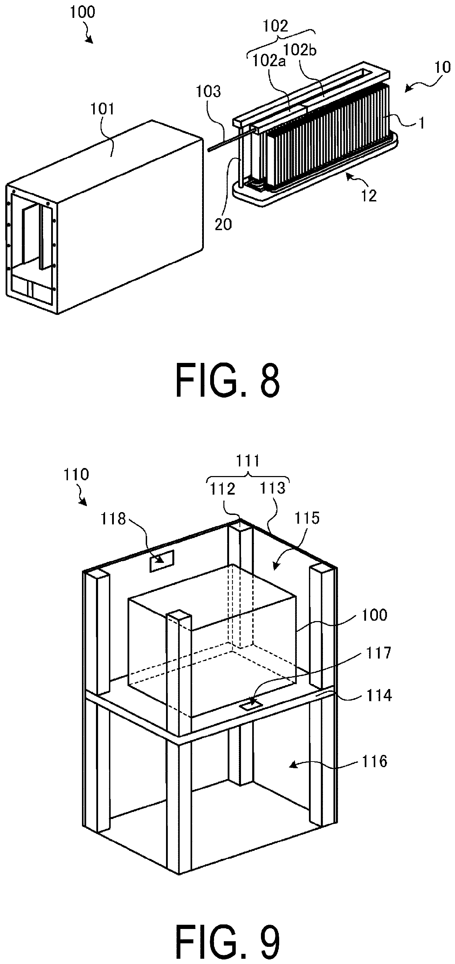

In the example illustrated in FIG. 2A, the fuel gas is stored in an internal space 22 formed by the support body 15 and the gas tank 16. The support body 15 and the gas tank 16 constitute the support member 14. The gas tank 16 includes a gas circulation pipe 20 connected thereto. The fuel gas is supplied to the gas tank 16 through the gas circulation pipe 20 and is supplied from the gas tank 16 to the gas-flow passages 2a (see FIG. 1A) inside the cells 1. The fuel gas supplied to the gas tank 16 is generated by a reformer 102 (see FIG. 8) to be described later.

A hydrogen-rich fuel gas can be produced, for example, by steam-reforming a raw fuel. When the fuel gas is produced by steam reforming, the fuel gas contains steam.

The example illustrated in FIG. 2A includes two rows of cell stacks 11, two support bodies 15, and the gas tank 16. The two rows of the cell stacks 11 each have a plurality of cells 1. Each of the cell stacks 11 is fixed to a corresponding one of the support bodies 15. An upper surface of the gas tank 16 includes two through holes. Each of the support bodies 15 is disposed in a corresponding one of the through holes. The internal space 22 is formed by the one gas tank 16 and the two support bodies 15.

The insertion hole 15a has, for example, an oval shape in a top surface view. The length of the insertion hole 15a in an arrangement direction of the cells 1, that is, the thickness direction T, may be longer than the distance between two end current collection members 17 located at both ends of the cell stack 11, for example. The width of the insertion hole 15a may be, for example, greater than the length of the cell 1 in the width direction W (see FIG. 1A).

As illustrated in FIG. 2B, the joined portions between the inner wall of the insertion hole 15a and the lower end portions of the cells 1 are filled with the fixing member 13 and solidified. As a result, the inner wall of the insertion hole 15a and the lower end portions of the plurality of cells 1 are bonded and fixed, and the lower end portions of the cells 1 are bonded and fixed to each other. The gas-flow passages 2a of each of the cells 1 communicate, at the lower end portion, with the internal space 22 of the support member 14.

The fixing member 13 and the bonding member 21 may be of low electrical conductivity, such as glass. As the specific materials of the fixing member 13 and the bonding member 21, amorphous glass or the like may be used, and especially, crystallized glass or the like may be used.

As the crystallized glass, for example, any one selected from the group consisting of SiO₂-CaO-based, MgO-B₂O₃-based, La₂O₃-B₂O₃-MgO-based, La₂O₃-B₂O₃-ZnO-based, and SiO₂-CaO-ZnO-based materials may be used, or, in particular, a SiO₂-MgO-based material may be used.

As illustrated in FIG. 2B, electrically conductive members 18 are each interposed between adjacent ones of the cells 1 of the plurality of cells 1. Each of the electrically conductive members 18 electrically connects in series the fuel electrode 5 of one of the adjacent ones of the cells 1 with the air electrode 8 of the other one of the adjacent ones of the cells 1. More specifically, the conductive member 18 electrically connects the interconnector 4 electrically connected to the fuel electrode 5 of the one of the adjacent cells 1 and the air electrode 8 of the other one of the adjacent cells 1. The electrically conductive member 18 may be in contact with the fixing member 13 or may not be in contact with the fixing member 13.

As illustrated in FIG. 2B, the end current collection members 17 are electrically connected to the cells 1 located at the outermost sides in the arrangement direction of the plurality of cells 1. The end current collection members 17 are each connected to an electrically conductive portion 19 protruding outward from the cell stack 11. The electrically conductive portion 19 collects electricity generated by the cells 1, and conducts the electricity to the outside. Note that in FIG. 2A, the end current collection members 17 are not illustrated.

As illustrated in FIG. 2C, in the cell stack device 10, two cell stacks 11A and 11B, which are connected in series, function as one battery. Thus, the electrically conductive portion 19 of the cell stack device 10 is divided into a positive electrode terminal 19A, a negative electrode terminal 19B, and a connection terminal 19C.

The positive electrode terminal 19A functions as a positive electrode when the electrical power generated by the cell stack 11 is output to the outside, and is electrically connected to the end current collection member 17 on a positive electrode side in the cell stack 11A. The negative electrode terminal 19B functions as a negative electrode when the electrical power generated by the cell stack 11 is output to the outside, and is electrically connected to the end current collection member 17 on a negative electrode side in the cell stack 11B.

The connection terminal 19C electrically connects the end current collection member 17 on the negative electrode side in the cell stack 11A and the end current collection member 17 on the positive electrode side in the cell stack 11B.

### Joining of Support Body and Electrochemical Cell

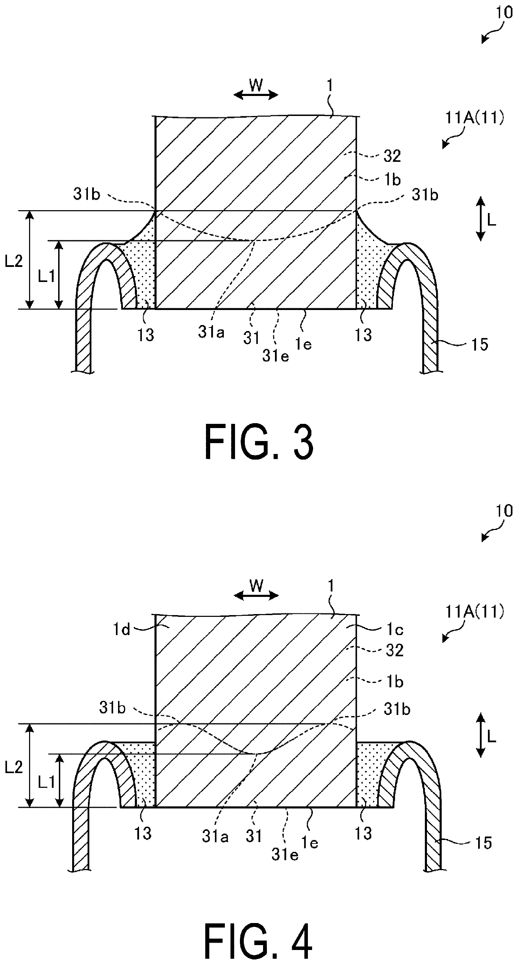

Next, joining between the support body 15 and the electrochemical cell will be described with reference to FIGs. 2B to 3. FIG. 3 is a cross-sectional view taken along line Y-Y illustrated in FIG. 2C.

As illustrated in FIG. 3, the support body 15 and the cell 1 are bonded to each other via the fixing member 13. The fixing member 13 is located on a first end 1e side which is a lower end of the cell 1 in the length direction L, and the support body 15 supports one end portion of the cell 1 including the first end 1e. In FIG. 3, the shape and structure of the cell 1 are simplified.

As illustrated in FIG. 2B, the fixing member 13 is located between the cells 1 adjacent to each other in the thickness direction T (see FIG. 1A). As illustrated in FIG. 3, the fixing member 13 is located to be in contact with the first surface 1b of the cell 1 along the length direction L and the width direction W. The first surface 1b includes a contact area 31 in contact with the fixing member 13 and a non-contact area 32 not in contact with the fixing member 13. The contact area 31 has a second end 31e on the first end 1e side. In FIG. 3, the second end 31e coincides with the first end 1e, but they may not coincide with each other.

The cell 1 constituting the cell stack device 10 may receive an external force in the width direction W. In such a case, the fixing member 13 that fixes the cell 1 may crack due to stress concentration caused by the external force applied to the cell 1, and the durability of the cell stack device 10 may be reduced.

In the embodiment, the thickness of the fixing member 13 in contact with the cell 1 is changed according to the ease of concentration of the stress, and the stress generated in the fixing member 13 is dispersed. In the embodiment, the length in the length direction L from the second end 31e of the contact area 31 to the non-contact area 32 is larger at the second part 31b located at the end portion in the width direction W than at the first part 31a located at the center portion in the width direction W.

When the cell 1 receives an external force in the width direction W, stress is more likely to be concentrated on the fixing member 13 located at the end portion in the width direction W than on the fixing member 13 located at the center portion in the width direction W. The thickness of the fixing member 13 at the second part 31b located at the end portion in the width direction W is made larger than the thickness of the fixing member 13 at the first part 31a located at the center portion in the width direction W, whereby the stress applied to the fixing member 13 can be dispersed. Therefore, since the durability of the fixing member 13 can be enhanced, the durability of the electrochemical cell device can be enhanced. The thickness of the fixing member 13 at the first part 31a located at the center portion in the width direction W is the length L1 from the second end 31e of the contact area 31 to the non-contact area 32. The width of the fixing member 13 at the second part 31b located at the end portion in the width direction W is the length L2 from the second end 31e of the contact area 31 to the non-contact area 32.

The length L2 of the contact area 31 located at the end portion in the width direction W may be, for example, about 1.1 × L1 ≤ L2 ≤ 2.5 × L1, particularly about 1.4 × L1 ≤ L2 ≤ 1.7 × L1, with reference to the length L1 of the contact area 31 located at the center portion in the width direction W. By defining the lengths L1 and L2 in this manner, even when the cell 1 receives an external force in the width direction W, the stress received by the fixing member 13 can be dispersed, and cracks are less likely to occur in the fixing member 13.

### Second to Fifth Embodiments

Electrochemical cell devices according to second to fifth embodiments will be described with reference to FIGs. 4 to 7. FIG. 4 is an enlarged cross-sectional view of a joined portion between a support body and an electrochemical cell in the electrochemical cell device according to the second embodiment. In FIG. 4, the second end 31e coincides with the first end 1e, but they may not coincide with each other.

As illustrated in FIG. 4, in the first surface 1b of the cell 1, the second part 31b located at the end portion in the width direction W may be located closer to the first part 31a than the end surfaces 1c and 1d in the width direction W of the cell 1. As described above, the second part 3 1b may be located distant from both ends of the first surface 1b in the width direction W.

The first part 31a located at the center portion in the width direction W may or may not be located at positions equally spaced from both ends of the first surface 1b in the width direction W. The contact area 31 of the first surface 1b may have a portion which is not in contact with the fixing member 13.

The fixing member 13 located outside the cell 1 in the width direction W may be flat along the width direction W, or the surface of the fixing member 13 may be inclined with respect to the width direction W so that the thickness of the fixing member 13 varies stepwise.

The second sites 3 1b located at both end portions in the width direction W may have the same or different lengths from the second end 31e of the contact area 31 to the non-contact area 32.

The electrochemical cell device according to the first and second embodiments may include, for example, only one cell 1 or two or more cells 1 satisfying the above-described conditions. All the cells 1 included in the electrochemical cell devices according to the first and second embodiments may satisfy the above-described conditions. Such an electrochemical cell device can increase the durability as compared with an electrochemical cell device that does not include the cell 1 satisfying the above-described conditions.

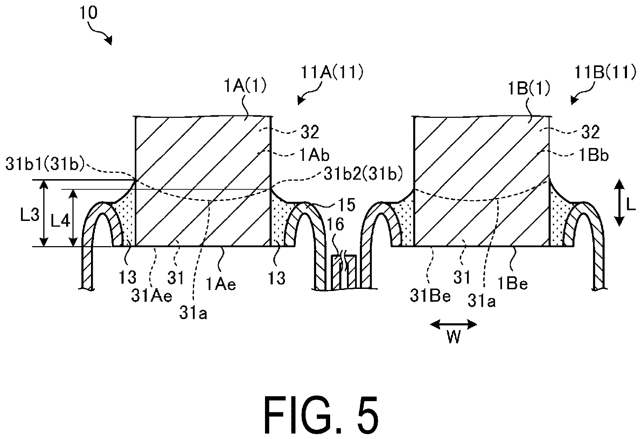

FIG. 5 is an enlarged cross-sectional view of a joined portion between a support body and an electrochemical cell in the electrochemical cell device according to the third embodiment. As illustrated in FIG. 5, in the case where a first cell 1A and a second cell 1B are arranged in the width direction W of the cell 1, the length in the length direction L from a second end 31Ae of the contact area 31 to the non-contact area 32 in the second part 31b of the first cell 1A may be larger at the first end portion 31b1 distant from the second cell 1B than at the second end portion 31b2 close to the second cell 1B. The length from the second end 31Ae of the contact area 31 to the non-contact area 32 at the first end portion 31b1 distant from the second cell 1B is referred to as a length L3, and the length from the second end 31Ae of the contact area 31 to the non-contact area 32 at the second end portion 31b2 close to the second cell 1B is referred to as a length L4.

For example, in the cell stack device 10 having the first cell 1A and the second cell 1B arranged in the width direction W, the first cell 1A is more likely to receive an external force in the width direction W at a portion distant from the second cell 1B than at a portion close to the second cell 1B. For this reason, the stress that the fixing member 13 receives can be dispersed by making the length L3 at the first end portion 31b1 of the first surface 1Ab close to the portion that is likely to receive the external force in the width direction W larger than the length L4 at the second end portion 3 1b2 close to the portion that is unlikely to receive the external force in the width direction W in the first cell 1A. As a result, cracks are less likely to occur in the fixing member 13 that fixes the first cell 1A, and the durability of the fixing member 13 can be increased. Therefore, the durability of the cell stack device 10 can be increased.

Similarly, in the fixing member 13 that fixes the second cell 1B, the length in the length direction L from the second end 31Be of the contact area 31 to the non-contact area 32 in the second part 31b of the second surface 1Bb corresponding to the first surface 1Ab may be larger at the second end portion close to the first cell 1A than at the first end portion distant from the first cell 1A. Accordingly, the stress received by the fixing member 13 that fixes the second cell 1B can be dispersed, and cracks are unlikely to be generated in the fixing member 13. Therefore, since the durability of the fixing member 13 that fixes the second cell 1B can be enhanced, the durability of the cell stack device 10 can be enhanced. In FIG. 5, the second end 31Ae coincides with the first end 1Ae, and the second end 31Be coincides with the first end 1Be, but they may not coincide with each other.

The electrochemical cell device according to the third embodiment may include, for example, only one first cell 1A or second cell 1B satisfying the above-described conditions, or may include two or more first cells 1A or second cells 1B satisfying the above-described conditions. All of the first cells 1A and the second cells 1B included in the electrochemical cell device according to the third embodiment may satisfy the above-described condition. Such an electrochemical cell device can have higher durability than an electrochemical cell device that does not include the first cell 1A or the second cell 1B satisfying the above-described conditions.

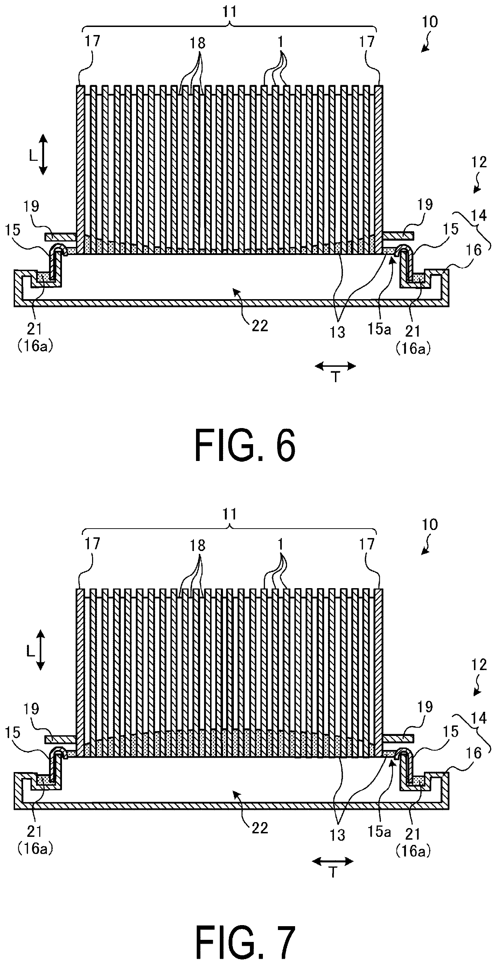

FIG. 6 is a cross-sectional view illustrating the electrochemical cell device according to the fourth embodiment. FIG. 7 is a cross-sectional view illustrating the electrochemical cell device according to the fifth embodiment.

The cell stack device 10 illustrated in FIGs. 6 and 7 is different from the cell stack device 10 illustrated in FIG. 2B in that the lengths in the length direction L of the fixing members 13 that fix the plurality of cells 1 arranged in the thickness direction T are different in accordance with the distances from the end current collection members 17.

As illustrated in FIG. 6, the fixing member 13 may be located such that the length along the length direction L decreases with increasing distance from the end current collection member 17. The fixing member 13 may be located such that the length along the length direction L is larger at a position close to the end current collection member 17 than at a position far from the end current collection member 17, that is, the center portion in the arrangement direction of the cell stack. Although the cell 1 close to the end current collection member 17 is likely to receive an external force, by varying the length of the fixing member 13 along the length direction L in this manner, for example, even when the cell 1 receives an external force in the thickness direction T, the stress received by the fixing member 13 located in the thickness direction T of the cell 1 can be dispersed. Therefore, since the durability of the fixing member 13 can be enhanced, the durability of the electrochemical cell device can be enhanced. The fixing member 13 located in the thickness direction T of the cell 1 is, in other words, the fixing member 13 located between the cells 1 arranged in the thickness direction T and located outside the cell stack in the thickness direction T.

As illustrated in FIG. 7, the fixing member 13 may be located such that the length along the length direction L increases with increasing distance from the end current collection member 17. The fixing member 13 may be located such that the length along the length direction L is larger at a position far from the end current collection member 17, that is, at the center portion in the arrangement direction of the cell stack than at a position close to the end current collection member 17. By varying the length of the fixing member 13 along the length direction L in this manner, for example, even when the support body 15 and/or the gas tank 16 is twisted due to random vibration caused by the driving of the cell stack device 10, the strain of the support body 15 and/or the gas tank 16 can be reduced at the center portion in the arrangement direction of the cell stack, which is likely to be influenced by the twist. Therefore, since the durability of the fixing member 13 can be enhanced, the durability of the electrochemical cell device can be enhanced.

### Module

A module 100 according to an embodiment of the present disclosure using the cell stack device 10 according to each of the above-described embodiments will be described with reference to FIG. 8. FIG. 8 is an external perspective view illustrating the module according to the embodiment. FIG. 8 illustrates a state in which the front and rear surfaces that are part of a storage container 101 are removed, and the cell stack device 10 of a fuel cell housed in the container is taken out rearward.

As illustrated in FIG. 8, the module 100 includes the storage container 101, and the cell stack device 10 housed in the storage container 101. The reformer 102 is disposed above the cell stack device 10.

The reformer 102 generates a fuel gas by reforming a raw fuel such as natural gas and kerosene, and supplies the fuel gas to the cell 1. The raw fuel is supplied to the reformer 102 through a raw fuel supply pipe 103. Note that the reformer 102 may include a vaporizing unit 102a for vaporizing water and a reforming unit 102b. The reforming unit 102b includes a reforming catalyst (not illustrated) for reforming the raw fuel into a fuel gas. Such a reformer 102 can perform steam reforming, which is a highly efficient reformation reaction.

The fuel gas generated by the reformer 102 is supplied to the gas-flow passages 2a (see FIG. 1A) of the cell 1 through the gas circulation pipe 20, the gas tank 16, and the support member 14.

In the module 100 having the configuration mentioned above, the temperature in the module 100 during normal power generation is about from 500°C to 1000°C due to combustion of gas and power generation by the cell 1.

As described above, the module 100 is configured by housing the cell stack device 10 having high durability, so that the module 100 having high durability can be obtained.

### Module Housing Device

FIG. 9 is an exploded perspective view illustrating an example of a module housing device according to an embodiment. A module housing device 110 according to the present embodiment includes an external case 111, the module 100 illustrated in FIG. 8, and an auxiliary device (not illustrated). The auxiliary device operates the module 100. The module 100 and the auxiliary device are housed in the external case 111. Note that in FIG. 9, the configuration is partially omitted.

The external case 111 of the module housing device 110 illustrated in FIG. 9 includes a support 112 and an external plate 113. A dividing plate 114 vertically partitions the interior of the external case 111. The space above the dividing plate 114 in the external case 111 is a module housing chamber 115 for housing the module 100. The space below the dividing plate 114 in the external case 111 is an auxiliary device housing chamber 116 for housing the auxiliary device configured to operate the module 100. Note that in FIG. 9, the auxiliary device housed in the auxiliary device housing chamber 116 is omitted.

The dividing plate 114 includes an air circulation hole 117 for causing air in the auxiliary device housing chamber 116 to flow into the module housing chamber 115 side. The external plate 113 constituting the module housing chamber 115 includes an exhaust hole 118 for discharging air inside the module housing chamber 115.

In the module housing device 110, the module housing device 110 having high durability can be obtained by providing the module 100 having high durability in the module housing chamber 115 as described above.

Note that, in the embodiment described above, the case where the support substrate of the hollow flat plate-shaped is used has been exemplified; however, the embodiment can also be applied to an electrochemical cell device using a cylindrical support substrate.

### Other Embodiments

An electrochemical cell device according to other embodiments will be described.

In each of the above-described embodiments, a so-called "vertically striped type" electrochemical cell device, in which only one element portion including the fuel electrode layer, the solid electrolyte layer, and the air electrode layer is provided on the surface of the support substrate, is exemplified. However, the present disclosure can be applied to a horizontally striped type electrochemical cell device with an array of so-called "horizontally striped type" electrochemical cells, in which a plurality of element portions are provided on the surface of the support substrate at mutually separated locations, and adjacent element portions are electrically connected to each other.

In each of the embodiments described above, a fuel cell, a fuel cell stack device, a fuel cell module, and a fuel cell device have been illustrated as examples of the "electrochemical cell", the "electrochemical cell device", the "module", and the "module housing device"; however, they may be an electrolytic cell, an electrolytic cell stack device, an electrolytic module, and an electrolytic device, respectively, as other examples. The electrolytic cell includes a first electrode layer and a second electrode layer, and decomposes water vapor into hydrogen and oxygen or decomposes carbon dioxide into carbon monoxide and oxygen by supplying electric power. Although an oxide ion conductor or a hydrogen ion conductor is shown as an example of the electrolyte material of the electrochemical cell in each of the above embodiments, the electrolyte material may be a hydroxide ion conductor. According to the electrolytic cell, electrolytic cell stack device, electrolytic module, and electrolytic device discussed above, durability can be improved.

While the present disclosure has been described in detail, the present disclosure is not limited to the aforementioned embodiment, and various changes, improvements, and the like can be made without departing from the gist of the present disclosure.

As described above, the electrochemical cell device according to the embodiment includes the cell 1, the support body 15, and the fixing member 13. The cell 1 has a first end 1e and extends in a first direction from the first end 1e. The support body 15 supports one end portion of the cell including the first end 1e. The fixing member 13 is located between the cell 1 and the support body 15, and is in contact with the first surface 1b of the cell 1 along the first direction and a second direction intersecting the first direction. The first surface 1b includes a contact area 31 in contact with the fixing member 13 and a non-contact area 32 not in contact with the fixing member 13. The contact area 31 has a second end 31e on the first end 1e side. The length in the first direction from the second end 31e to the non-contact area 32 on the side opposite to the first end 1e is larger at the second part 31b located at the end portion in the second direction than at the first part 31a located at the center portion in the second direction. Thus, since the durability of the fixing member 13 can be enhanced, the durability of the electrochemical cell device can be enhanced.

The electrochemical cell device according to the embodiment includes the first cell 1A, the first support body, the second cell 1B, the second support body, and the fixing member 13. The first cell 1A has a first end 1Ae and extends in the first direction from the first end 1Ae. The first support body supports one end portion of the first cell 1A including the first end 1Ae. The second cell 1B is adjacent to the first cell 1A with the first support body interposed therebetween. The second support body supports one end portion of the second cell 1B adjacent to the one end portion of the first cell 1A. The fixing member 13 is in contact with the first surface 1Ab of the first cell 1A along the first direction and a second direction intersecting the first direction and the second surface 1Bb of the second cell 1B along the first direction and the second direction. The first surface 1Ab includes a contact area 31 in contact with the fixing member 13 and a non-contact area 32 not in contact with the fixing member 13. The contact area 31 has a second end 31Ae on the first end 1Ae side. The length in the first direction from the second end 31Ae to the non-contact area 32 on the side opposite to the first end 1Ae is larger at the second part 31b located at the end portion in the second direction than at the first part 31a located at the center portion in the second direction. The length, at the second part 31b, in the first direction from the second end 31Ae to the non-contact area 32 on the side opposite to the first end 1Ae is larger at the first end portion 3 1b1 distant from the second cell 1B than at the second end portion 3 1b2 close to the second cell 1B. Thus, since the durability of the fixing member 13 can be enhanced, the durability of the electrochemical cell device can be enhanced.

The module 100 according to the embodiment includes the electrochemical cell device described above, and a storage container 101 that houses the electrochemical cell device. Thus, the module 100 having high durability can be obtained.

The module housing device 110 according to the embodiment includes the module 100 described above, the auxiliary device configured to operate the module 100, and the external case housing the module 100 and the auxiliary device. Thus, the module housing device 110 having a high durability can be obtained.

Note that the embodiments disclosed herein are exemplary in all respects and not restrictive. The aforementioned embodiments can be embodied in a variety of forms. The aforementioned embodiments may be omitted, replaced, or changed in various forms without departing from the scope of the appended claims and the purpose thereof.

### REFERENCE SIGNS

1 Cell
3 Element portion
5 Fuel electrode
6 Solid electrolyte layer
7 Intermediate layer
8 Air electrode
10 Cell stack device
11 Cell stack
12 Fixing member
13 Fixing member
14 Support member
15 Support body
16 Gas tank
17 End current collection member
18 Electrically conductive member
100 Module
110 Module housing device

## Claims

1. An electrochemical cell device comprising:
a cell comprising:
a first end, the cell extending from the first end in a first direction;
a first surface along the first direction and a second direction intersecting the first direction;
a support body supporting one end portion of the cell comprising the first end; and
a fixing member located between the cell and the support body, the fixing member in contact with the first surface, wherein
the first surface comprises:
a contact area in contact with the fixing member; and
a non-contact area in no contact with the fixing member,
the contact area comprises a second end located on a side of the first end, and
a length in the first direction from the second end to the non-contact area on a side opposite to the first end is larger at a second part located at an end portion in the second direction than at a first part located at a center portion in the second direction.

2. An electrochemical cell device comprising:
a first cell comprising:
a first end, the first cell extending from the first end in a first direction;
a first surface along the first direction and a second direction intersecting the first direction;
a first support body supporting one end portion of the first cell comprising the first end;
a second cell adjacent to the first cell with the first support body therebetween, the second cell comprising a second surface along the first direction and the second direction;
a second support body supporting one end portion of the second cell adjacent to the one end portion of the first cell; and
a fixing member in contact with the first surface, and in contact with the second surface, wherein
the first surface comprises:
a contact area in contact with the fixing member; and
a non-contact area in no contact with the fixing member,
the contact area comprises a second end located on a side of the first end,
a length in the first direction from the second end to the non-contact area on a side opposite to the first end is larger at a second part that is located at an end portion in the second direction than at a first part that is located at a center portion in the second direction, and
a length, at the second part, in the first direction from the second end to the non-contact area on a side opposite to the first end is larger at a first end portion distant from the second cell than at a second end portion close to the second cell.

3. A module comprising:
the electrochemical cell device according to claim 1 or 2; and
a storage container housing the electrochemical cell device.

4. A module housing device comprising:
the module according to claim 3;
an auxiliary device configured to operate the module; and
an external case housing the module and the auxiliary device.
